# EUROPÄISCHE PATENTSCHRIFT

(11) **EP 2 676 423 B1**
(45) Veröffentlichungstag und Bekanntmachung des Hinweises auf die Patenterteilung: **12.04.2017**
(21) Anmeldenummer: 11790577.8
(22) Anmeldetag: 18.11.2011
(51) Int. Cl.: H04L 12/58, H04B 1/3816, H04W 4/12, H04M 1/663, H04M 3/42, H04W 12/02, H04W 12/06, H04M 1/725, H04W 8/26, H04L 29/06, H04M 3/436, H04W 24/00, H04W 88/02

(54) **VORRICHTUNG UND COMPUTERPROGRAMM ZUR DISKRETEN KOMMUNIKATION FÜR EIN MOBILES KOMMUNIKATIONSGERÄT**
APPARATUS AND COMPUTER PROGRAM FOR DISCREET COMMUNICATION FOR A MOBILE COMMUNICATION APPLIANCE
DISPOSITIF ET PROGRAMME D'ORDINATEUR PERMETTANT UNE COMMUNICATION DISCRÈTE POUR UN APPAREIL DE COMMUNICATION MOBILE

(30) Priorität: 20.01.2011 DE 102011002903
(43) Veröffentlichungstag der Anmeldung: 25.12.2013
(73) Patentinhaber: Hilz, Max, 94518 Spiegelau (DE)
(72) Erfinder: Hilz, Max, 94518 Spiegelau (DE)
(74) Vertreter: Wegner, Hans
(86) Internationale Anmeldenummer: PCT/EP2011/070415
(87) Internationale Veröffentlichungsnummer: WO 2012/097898

(56) Entgegenhaltungen:
- US-A1- 2009 088 168
- US-A1- 2010 074 420
- Anonymous: "Advanced Productivity Pack", , 17. Dezember 2010 (2010-12-17), Seiten 1-3, XP55026859, Gefunden im Internet: URL:http://web.archive.org/web/20101217235 906/http://melonmobile.com/Products/Advanc ed_Productivity_Pack/219/ProductDetailsOve rview.aspx [gefunden am 2012-05-10]
- Anonymous: "Call Control", , 17. Dezember 2010 (2010-12-17), XP55026877, Gefunden im Internet: URL:http://web.archive.org/web/20101217234 805/http://melonmobile.com/Products/Call_C ontrol/228/ProductDetailsOverview.aspx [gefunden am 2012-05-10]
- ANONYMOUS: 'Kaspersky Mobile Security 9.0 - User Guide', [Online] 24 August 2010, Seiten 1 - 208, XP055026687 Gefunden im Internet: <URL:http://docs.kaspersky-labs.com/english /ks9.0_mobile_en.pdf> [gefunden am 2012-05-09]

## Beschreibung

### 1. Technisches Gebiet

Die vorliegende Erfindung betrifft eine Vorrichtung für die mobile Kommunikation zum Schutz vertraulicher Informationen und zur selektiven Erreichbarkeit.

### 2. Stand der Technik

Permanente Erreichbarkeit für andere Personen ist im heutigen Geschäfts- und Privatleben fast schon obligatorisch. Zum Beispiel ist es für Geschäftsleute wichtig, für Kunden jederzeit und an allen Orten erreichbar zu sein. Auch Berufsgruppen wie Ärzte unterliegen der Anforderung nach ständiger Erreichbarkeit. Selbst Privatpersonen fühlen sich dem Druck ausgesetzt, immer erreichbar zu sein. Dies führt dazu, dass man nahezu immer ein mobiles Kommunikationsgerät, z.B. Handy oder Smartphone, mit sich führt. Diese Mobilität birgt jedoch auch Risiken. Ein häufiges Problem der ständigen Erreichbarkeit besteht darin, dass man jederzeit auch für unerwünschte Personen erreichbar ist. Während der Arbeitszeit möchte man beispielsweise nur für Kunden oder Kollegen telefonisch erreichbar sein, nicht jedoch für private Gespräche. Darüber hinaus fühlt man sich durch unerwünschte Werbeanrufe oder sogar Stalkinganrufe belästigt. Die ständige Erreichbarkeit kann insbesondere auch zu einem Rückgang der Konzentrationsfähigkeit, verminderter Arbeitsleistung bis hin zu psychischen Erkrankungen führen.

Ein anderes Problem entsteht durch den Verlust oder das Ausspionieren eines mobilen Kommunikationsgeräts, wodurch hohe persönliche und finanzielle Schäden entstehen können. Beispielsweise könnten vertrauliche Geschäftsinformationen für jedermann zugänglich werden. Des Weiteren könnten private Informationen öffentlich werden und so zu Nachteilen für den Besitzer der Informationen führen.

Hierzu offenbart die Europäische Patentanmeldung EP 2 017 767 ein Verfahren, um den Verlust vertraulicher Informationen zu vermeiden, indem diese Daten von einem Mobiltelefon in eine bestimmte Speichereinheit verschoben werden, z.B. über eine USB-Verbindung oder ein Netzwerk.

Die Internationale Patentanmeldung WO 2009/098289 bezieht sich auf ein Verfahren zur Filterung ankommender bzw. abgehender Gespräche basierend auf einem "subscriber identity module" (SIM-Karte). Über ein Vergleichs- bzw. Filtermodul kann über die SIM-Karte ein Telefonbefehl ausgegeben werden, welcher das Telefon vom Telefonnetzwerk trennt.

Darüber hinaus sind Anruffilter bekannt, die auf einem sogenannten Whitelist- bzw. Blacklist-Mechanismus basieren. Dies bedeutet, dass die Anrufe von in einer Whitelist gespeicherten Telefonnummern durchgestellt werden, während die Anrufe von in einer Blacklist gespeicherten Telefonnummern blockiert bzw. abgewiesen werden. Außerdem ist bekannt, dass bestimmten Telefonnummern verschiedene Klingeltöne oder auch Symbole auf dem Display zugewiesen werden können.

Die amerikanische Patentanmeldung US 2010/0074420 beschreibt ein Verwaltungssystem für Anrufe unter Verwendung einer Whitelist, bzw. einer Blacklist. Anrufer, deren Rufnummer auf der Blacklist steht, werden abgewiesen oder an ein Mailboxsystem umgeleitet. Anrufer, deren Rufnummer auf der Whitelist steht, werden zur Eingabe eines Passwortes aufgefordert. Nach korrekter Eingabe des Passwortes wird der Anruf durchgestellt.

Das Dokument Anonymous: "Advanced Productivity Pack", XP055026859, beschreibt eine App, die einen Schutz eines Telefons und mobiler Kommunikation ermöglichen soll, z.B. durch Blockierung ankommender Anrufe oder durch Verwendung eines Alarmsystems.

Das Dokument Anonymous: "Call Control", XP055026877, beschreibt eine Kindersicherung. Es können z.B. Anrufe von unbekannten Kontakten abgewiesen werden.

Die Veröffentlichung der US-Patentanmeldung US 2009 / 0088168 A1 beschreibt einen Anruffilter basierend auf Prioritäten. Anrufe können durchgestellt werden, wenn ein mit dem Kontakt verknüpfter Schwellenwert überschritten wird.

Das Benutzerhandbuch der Software "Kaspersky Mobile Security 9" offenbart eine Funktion Privatsphäre, die unbefugten Zugriff auf Daten durch Dritte verhindert. Daten und Ereignisse, die bestimmte Nummern betreffen, werden verborgen. Es gibt einen Filtermechanismus basierend auf einer Blacklist, bzw. einer Whitelist.

Die im Stand der Technik bekannten Verfahren sind jedoch nachteilig. So ist es wünschenswert, Informationen abhängig von verschiedenen Kriterien so zu speichern, dass sie zu keinem Zeitpunkt für unberechtigte Personen zugänglich waren oder sind. Darüber hinaus ist ein simpler "Schwarz-Weiß"-Mechanismus, der auf einem einfachen Filter beruht sehr unflexibel, da nur ungenaue Vorgaben zur Filterung vorgesehen sind, z.B. nur eine Filterung anhand der Telefonnummer erlauben.

Der vorliegenden Erfindung liegt daher das Problem zugrunde, eine Vorrichtung bereitzustellen, die zumindest einen Teil der oben erläuterten Nachteile überwindet.

### 3. Zusammenfassung der Erfindung

Das Problem wird gemäß einem ersten Aspekt der Erfindung durch eine Vorrichtung für ein mobiles Kommunikationsgerät gelöst, welche Mittel aufweist zum Erkennen einer eindeutigen Teilnehmer-Identifikation einer ankommenden Kommunikation. Ferner weist die Vorrichtung Mittel zum Speichern der ankommenden Kommunikation in einen zugriffsgeschützten Bereich des mobilen Kommunikationsgeräts auf, wenn die Teilnehmer-Identifikation mindestens ein bestimmtes Kriterium erfüllt. Ferner weist die Vorrichtung Mittel auf zum Durchstellen ankommender Kommunikation, wenn mindestens ein bestimmtes Kriterium erfüllt ist und wobei das mindestens eine Kriterium zum Speichern und / oder Durchstellen der ankommenden Kommunikation auf einer Erkennung der Kontakthäufigkeit basiert.

Hierdurch wird es dem Benutzer ermöglicht, nach einem von ihm selbst definierten Profil bestimmte Daten auf seinem Gerät vor unbefugtem Zugriff zu schützen. Dies funktioniert auch bei eingeschaltetem und insbesondere ohne PIN-Code zugänglichem mobilen Kommunikationsgerät. Der zugriffsgeschützte Bereich ("Privatbereich") im Gerät stellt also eine weitere und geschützte Kommunikationsebene dar, auf die nur der berechtigte Benutzer zugreifen kann. Erfahrungsgemäß sind nicht alle ankommenden Gespräche, Nachrichten oder Kontakte vertraulich. Die vorliegende Erfindung bietet daher die Möglichkeit, unter Berücksichtigung mindestens eines Kriteriums welches von der jeweiligen Teilnehmer-Identifikation abhängt die ankommende Kommunikation in den zugriffsgeschützten Bereich zu verschieben oder direkt dort abzulegen. Insbesondere ist dieser zugriffsgeschützte Bereich für normale Benutzer verborgen und daher kann nur durch Berechtigte auf diesen versteckten Bereich zugegriffen werden. Der Zugriff könnte zum Beispiel nach Eingabe eines Codes, eines Fingerabdrucks, eines Augenscans oder einer anderen Sicherheitsüberprüfung gewährt werden. Auf diese Weise werden vertrauliche Informationen in dem zugriffsgeschützten Bereich abgelegt, ohne dass sie für unberechtigte Dritte (z.B. Diebe) einsehbar sind.

Die an einem mobilen Kommunikationsgerät ankommende Kommunikation kann üblicherweise nicht nur in vertrauliche bzw. nichtvertrauliche Nachrichten unterteilt werden. Vielmehr kommt es regelmäßig vor, dass bestimmte Anrufe oder Nachrichten unerwünscht sind. Dies können beispielsweise Werbeanrufe oder allgemein jegliche Art von Kontakt sein, die zumindest zum gegenwärtigen Zeitpunkt unerwünscht sind. Des Weiteren sind bestimmte Kontakte immer erwünscht, z.B. die von bestimmten Geschäftspartnern oder Familienmitgliedern. Die erfindungsgemäße Vorrichtung ermöglicht es, Kommunikation, die ein bestimmtes Kriterium erfüllt, zum kontaktierten Teilnehmer durchzustellen. Hierbei ist es entsprechend den oben erwähnten Merkmalen möglich, die Kommunikation auch in dem zugriffsgeschützten Bereich abzulegen oder diese direkt auf dem mobilen Kommunikationsgerät anzuzeigen.

Es ist denkbar, dass ein Anrufer nicht vorher bekannt ist, aber dennoch eine wichtige Mitteilung hat. In einem solchen Fall ist es möglich, dass die erfindungsgemäße Vorrichtung nach mehreren Kontaktversuchen die Kommunikation durchstellt. So können auch wichtige Informationen von zunächst unbekannten Teilnehmern den Adressaten erreichen. Umgekehrt ist es auch denkbar, Kommunikationsversuche mit hoher Frequenz zumindest vorläufig automatisch abzuweisen, um eine Belästigung zu vermeiden. Es ist auch denkbar, dass man mit einem anderen Teilnehmer eine bestimmte Anzahl von Kontaktversuchen vereinbart, bevor dieser durchgestellt wird. Vorzugsweise entspricht die Teilnehmer-Identifikation einer Telefonnummer. Üblicherweise wird eine eingehende Kommunikation durch eine Telefonnummer identifiziert. So kann anhand der Telefonnummer direkt darauf geschlossen werden, ob die ankommende Kommunikation vertraulich ist oder nicht. Dann könnte eine Nachricht automatisch in dem zugriffsgeschützten Bereich abgelegt werden, vorzugsweise ohne dass auf dem mobilen Kommunikationsgerät eine Anzeige über eine ankommende Nachricht erscheint. Denkbar sind aber auch andere Formen der Teilnehmer-Identifikation.

Bevorzugt ist die ankommende Kommunikation ein Telefongespräch. Eingehende Telefongespräche bzw. Anrufe werden üblicherweise auf dem mobilen Kommunikationsgerät angezeigt. Dies kann beispielsweise durch das Anzeigen der Telefonnummer oder eines mit der Telefonnummer verbundenen Namens geschehen. Selbst die bloße Anzeige eines solchen Kontaktversuches kann unter Umständen zu Nachteilen für den Angerufenen führen. Die der vorliegenden Erfindung zugrunde liegende Vorrichtung erlaubt das Erkennen eines ankommenden Telefongespräches bevor eine Anzeige auf dem mobilen Kommunikationsgerät erfolgt. Dadurch kann der Kontaktversuch direkt in den zugriffsgeschützten Bereich umgeleitet werden. In einem Beispiel erfolgt keine Anzeige einer ankommenden Kommunikation, auch nicht, nachdem diese in den zugriffsgeschützten Bereich umgeleitet wurde. In diesem Fall kann eine vertrauliche Kommunikation nur durch den Zugriff auf den zugriffsgeschützten Bereich erkannt werden. In einem weiteren Beispiel kann auch durch ein unauffälliges Signal auf eine ankommende Kommunikation bzw. auf eine bereits in dem zugriffsgeschützten Bereich abgelegte Kommunikation hingewiesen werden. Hierbei kann es sich z.B. um ein unauffälliges Symbol auf dem Display handeln, um das Blinken eines am mobilen Kommunikationsgerät angebrachten Lichtsignals (z.B. einer LED) oder auch um ein Tonsignal.

Gemäß einem weiteren Aspekt ist die ankommende Kommunikation eine Kurznachricht. Kurznachrichten können reine Textnachrichten sein (z.B. SMS), aber auch multimediale Informationen wie Bilder, Videos oder Tonsignale umfassen (z.B. MMS). Eingehende Kurznachrichten sind in der Regel für jeden zugänglich, der Zugriff auf das mobile Kommunikationsgerät hat. Somit ist weder der Inhalt, noch der Absender der Kurznachricht geschützt. Dies kann zu erheblichen Nachteilen für den eigentlichen Empfänger führen. Die vorliegende Erfindung löst dieses Problem, indem eingehende Kurznachrichten anhand einer Teilnehmer-Identifikation identifiziert werden und vorzugsweise ohne jegliche vorherige Anzeige in dem zugriffsgeschützten Bereich gespeichert werden. Auf diese Weise gibt es keinen Hinweis auf eine eingegangene Kurznachricht und somit können Unbefugte auch keinen Verdacht schöpfen und das mobile Kommunikationsgerät untersuchen. In einem Beispiel handelt es sich bei einer Kurznachricht um eine SMS (Short Message Service), die nur Text beinhaltet. In einem weiteren Beispiel kann es sich auch um eine andere Form einer Kurznachricht handeln, z.B. um eine MMS (Multimedia Messaging Service). Diese Nachrichten umfassen multimediale Signale wie z.B. Bilder, Videos und / oder Tonsignale. Andere Arten von Kurznachrichten sind auch denkbar.

In einer bevorzugten Ausführungsform ist der Zugriff auf den zugriffsgeschützten Speicherbereich durch ein Passwort geschützt. Ein weiterer Vorteil der vorliegenden Erfindung liegt darin, dass der zugriffsgeschützte Bereich nicht nur dadurch geschützt ist, dass sein Inhalt nicht angezeigt wird, sondern zusätzlich auch noch durch ein beliebiges Passwort gesichert ist. Dies erhöht die Sicherheit, was für besonders vertrauliche Informationen, wie z.B. Betriebsgeheimnisse oder persönliche Geheimnisse, von hoher Wichtigkeit ist.

Gemäß einer weiteren bevorzugten Ausführungsform ist der Zugriff auf den zugriffsgeschützten Speicherbereich durch einen Fingerabdruck geschützt. Eine erhöhte Sicherheit kann durch einen Schutz des zugriffsgeschützten Speicherbereiches durch einen Fingerabdruck erzielt werden. Da Fingerabdrücke einzigartig sind, hat somit nur die berechtigte Person Zugang zu dem zugriffsgeschützten Bereich. Andere biometrische Verfahren wie Irisidentifikation, Handschrift- oder Gestenerkennung, sowie Spracheingabe eines Codewortes sind ebenfalls denkbar.

Vorzugsweise umfasst der zugriffsgeschützte Speicherbereich ein Postfach für Sprachnachrichten. Häufig hinterlassen Anrufer eine kurze Nachricht, wenn sie den Angerufenen nicht erreichen. Die vorliegende Erfindung erlaubt es, diese Nachrichten in dem zugriffsgeschützten Bereich abzulegen, ohne dass ein Außenstehender von der Aktivität des mobilen Kommunikationsgerätes Notiz nimmt. Dies bietet eine weitere Sicherheit gegenüber herkömmlichen Postfächern für Sprachnachrichten ("Mailbox"), denn diese können prinzipiell von jedem abgerufen werden, der Zugriff auf das mobile Kommunikationsgerät hat. Zusätzlich wird durch die vorliegende Erfindung vermieden, dass auf dem mobilen Kommunikationsgerät ein Hinweis auf eine eingegangene Nachricht angezeigt wird.

Die Vorrichtung umfasst weiterhin Mittel zum Erkennen einer eindeutigen Teilnehmer-Identifikation einer abgehenden Kommunikation und Mittel zum Speichern der abgehenden Kommunikation in einen zugriffsgeschützten Speicherbereich des mobilen Kommunikationsgerätes, wenn die Teilnehmer-Identifikation mindestens ein bestimmtes Kriterium erfüllt. So ist es auch möglich, aus dem geschützten Speicherbereich zu kommunizieren, da abgehende Kommunikation für unberechtigte Nutzer nicht erkennbar ist. Es könnten z.B. abgeschickte Kurznachrichten direkt im zugriffsgeschützten Speicherbereich verwahrt werden, sodass für Unberechtigte kein Hinweis auf diese Kommunikation erkennbar ist. Es wäre für unberechtigte Nutzer auch kein Hinweis auf getätigte Anrufe sichtbar. Auf diese Weise ist sowohl ankommende als auch abkommende Kommunikation vor unberechtigten Nutzern geschützt, wenn sie die Kriterien zum Speichern in den zugriffsgeschützten Bereich erfüllt.

Bevorzugt hängt ein zusätzliches Kriterium zum Speichern und / oder Durchstellen der ankommenden Kommunikation von einer Uhrzeit oder / und einem Datum ab. Die vorliegende Erfindung bietet die Möglichkeit, eine Entscheidung darüber, ob ankommende Kommunikation in dem zugriffsgeschützten Speicherbereich abgelegt, durchgestellt oder abgewiesen werden soll, anhand der Tageszeit oder auch dem Datum zu treffen. In einem Beispiel können die Einstellungen von Uhrzeit und / oder Datum nur durch einen autorisierten Benutzer durchgeführt werden. Zur Autorisierung dienen die in dieser Beschreibung offenbarten Verfahren, wie z.B. Eingabe eines Codes, biometrische Verfahren usw. Dies bietet vielseitige Vorteile. Häufig möchte man abends oder am Wochenende für bestimmte Personen nicht erreichbar sein, tagsüber hingegen schon, z.B. für Familienmitglieder. Es ist auch denkbar, während eines Urlaubs eine bestimmte Regelung für das Verfahren mit ankommender Kommunikation von verschiedenen Kontakten zu definieren.

Vorzugsweise hängt ein zusätzliches Kriterium zum Speichern und / oder Durchstellen der ankommenden Kommunikation vom Standort des empfangenden mobilen Kommunikationsgerätes ab. In einem Beispiel kann die Erreichbarkeit nur durch einen berechtigten Nutzer erfolgen, wie es in dieser Beschreibung offenbart ist. Datenverbindungen oder Telefongespräche im Ausland zu führen ist häufig teuer. Die vorliegende Erfindung ermöglicht es, ankommende Kommunikation abzuweisen, ohne dass Kosten entstehen, wenn die Teilnehmer-Identifikation ein bestimmtes Merkmal erfüllt. Der jeweilige Standort des Gerätes kann durch verschiedene bekannte Verfahren ermittelt werden. Ein Beispiel hierfür wäre eine Ortsbestimmung anhand einer oder mehrerer Funkzellen mit der das mobile Kommunikationsgerät verbunden ist. Denkbar ist auch eine Ortsbestimmung anhand eines GPS-Signals. Eine andere Möglichkeit ist es, einen bestimmten Empfangsbereich zu definieren, z.B. einen Umkreis um einen bestimmten Standort. So könnte man z.B. nur ankommende oder abgehende Kommunikation zulassen, wenn sich der andere Teilnehmer in einem bestimmten Umkreis befindet. Es ist auch denkbar, dass die Entscheidung davon abhängt, wie lange sich das mobile Kommunikationsgerät an einem bestimmten Standort befindet.

Es kann außerdem eine Nachricht an den anderen Teilnehmer gesendet werden. Wird die ankommende Kommunikation abgelehnt oder wird sie in dem zugriffsgeschützten Speicherbereich abgelegt, kann es sinnvoll sein, den Absender bzw. Anrufer darüber zu informieren. Die Nachricht könnte den Absender bzw. Anrufer davon in Kenntnis setzen, dass die entsprechende Kommunikation, z.B. SMS, MMS, vertraulich gespeichert wurde und daher möglicherweise erst zu einem späteren Zeitpunkt gelesen werden kann. Es ist auch möglich, den Absender bzw. Anrufer darüber zu informieren, dass der Kommunikationsversuch abgelehnt wurde und weshalb. Verschiedene Möglichkeiten wären ein Hinweis auf einen Auslandsaufenthalt, auf andauernde geschäftliche Termine oder sonstige Ereignisse, die einen sofortigen Informationsaustausch nicht erlauben. Ein Hinweis darauf, dass eine gesendete Nachricht in einem sicheren Bereich abgelegt wurde, kann als zusätzliche Bestätigung für den Absender dienen. Eine weitere Möglichkeit ist das Senden eines Signals statt einer Nachricht, z.B. könnte eine automatische Antwort in Form eines grafischen Symbols erfolgen. In einem Beispiel könnte dem Absender der in den zugriffsgeschützen Bereich gespeicherten Nachricht der Abruf dieser Nachricht durch den berechtigten Nutzer angezeigt werden. Dies könnte z.B. durch das Senden einer Kurznachricht geschehen.

Vorzugsweise basiert ein zusätzliches Kriterium zum Speichern und / oder Durchstellen der ankommenden Kommunikation auf einer Prioritätseinteilung. Im täglichen Leben sind verschiedenen Personengruppen regelmäßig verschiedene Prioritäten zugeordnet. Beispielsweise könnten enge Familienmitglieder eine besonders hohe Priorität haben, die dazu führt, dass sämtliche Kontaktversuche immer durchgestellt werden. Kontakte, die einer anderen Priorität zugeordnet sind, könnten nur werktags zwischen 7 Uhr und 19 Uhr durchgestellt werden, während die einer weiteren Gruppe zugeordneten Kontakte regelmäßig nur in der Freizeit, also beispielsweise am Wochenende durchgestellt werden. Auf diese Weise kann die Informationsflut auf einfache Weise durch den Empfänger der jeweiligen Daten gesteuert werden und nicht durch den Absender.

Gemäß einem Beispiel, das nicht Bestandteil der Erfindung ist, befindet sich die Vorrichtung nicht auf dem mobilen Kommunikationsgerät. In herkömmlichen Systemen wird eine Mailbox von den Netzwerkbetreibern (Provider) bereitgestellt, z.B. auf dafür vorgesehenen Servern. Es ist möglich, die Erfindung in ähnlicher Weise zu verwirklichen, wobei eine herkömmliche Mailbox gemäß einem oder mehrerer der genannten Aspekte angepasst wird. In einem Beispiel kann es auch eine zusätzliche Mailbox geben, welche die erfindungsgemäßen Aspekte umsetzt. Eine Steuerung kann durch den Benutzer über das mobile Kommunikationsgerät erfolgen. Ein Vorteil dieser Ausführungsform ist der reduzierte Energiebedarf auf Seite des mobilen Kommunikationsgerätes, da jede Kommunikation bereits abgefangen und bearbeitet werden kann, bevor sie den Adressaten überhaupt erreicht. Der Abruf von Informationen in zugriffsgeschützten Speicherbereichen könnte dann vom mobilen Kommunikationsgerät aus geschehen, genauso wie die Konfiguration der gewünschten Kriterien. Des Weiteren erlaubt dieses Merkmal die Speicherung ankommender Kommunikation, in einen zugriffsgeschützten Bereich auch dann, wenn das mobile Kommunikationsgerät ausgeschaltet ist. Eine Steuerung dieser zusätzlichen "Mailbox" erfolgt hierbei über einen berechtigten Nutzer unter Verwendung eines Zugangscodes, wie in dieser Beschreibung offenbart.

Die Vorrichtung beschränkt weiterhin abgehende Kommunikation nach der Häufigkeit. Abgehende Kommunikationsversuche zu beschränken, bietet vielfältige Vorteile. Auf diese Weise könnten Eltern z.B. die Nutzung des mobilen Kommunikationsgerätes durch ihre Kinder zeitlich beschränken. Es ist auch möglich, nur bestimmte Teilnehmer-Identifikationen oder Vorwahlbereiche zu sperren.

### 4. Kurze Beschreibung der begleitenden Figuren

Im Folgenden werden Aspekte der vorliegenden Erfindung unter Bezugnahme auf die begleitenden Figuren erläutert. Die Figuren zeigen:
- **Fig. 1:**: eine schematische Darstellung des erfindungsgemäßen Verfahrens;
- **Fig. 2:**: ein Flussdiagramm entsprechend einer Implementierung des erfindungsgemäßen Verfahrens; und
- **Fig. 3:**: eine schematische Darstellung einer bevorzugten Ausführungsform der Erfindung.

### 5. Detaillierte Beschreibung von bevorzugten Ausführungsformen

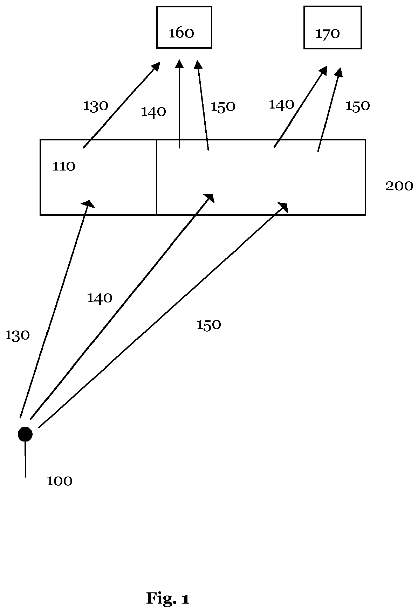

Fig. 1 beschreibt eine mögliche Ausführungsform der Erfindung. Ein mobiles Kommunikationsgerät **200** weist einen zugriffsgeschützten Speicherbereich **110** auf. Es sind verschiedene Ausführungsformen denkbar. Das mobile Kommunikationsgerät kann einen einzelnen geschützten Speicherbereich aufweisen. Es ist auch möglich, dass das mobile Kommunikationsgerät mindestens einen ungeschützten Speicherbereich und mindestens einen zugriffsgeschützten Speicherbereich umfasst. Ankommende Anrufe aus dem Funknetz **100** werden entsprechend einer jeweiligen Teilnehmer-Identifikation **130, 140, 150** in den zugriffsgeschützten Speicherbereich **110** gespeichert oder an den Nutzer des Telefons **160, 170** direkt weitergeleitet. Eine Kommunikation **130,** deren Teilnehmer-Identifikation einem vertraulichen Kontakt, wie z.B. einem Geschäftspartner, zugeordnet ist, wird - ohne am mobilen Kommunikationsgerät angezeigt zu werden - direkt in dem zugriffsgeschützten Speicherbereich **110** gespeichert.

Ein berechtigter Nutzer **160** kann diese Information anschließend abrufen. Der Zugriff kann unter Verwendung verschiedener Mittel erfolgen, wie beispielsweise einer Abfrage eines PIN-Codes, eines Fingerabdruckes oder eines Iris-Scans.

Ankommende Kommunikation **140** eines Teilnehmers, der nicht einer vertraulichen Gruppe zugeordnet ist, wird ohne weiteres direkt an den Nutzer **160** durchgestellt. Dasselbe ist der Fall für unbekannte Teilnehmer-Identifikationen **150,** z.B. auf Grund einer nicht übermittelten Teilnehmer-Identifikation.

So ist es möglich, dass nur der berechtigte Nutzer **160** überhaupt vom Eingang privater Nachrichten **130,** z.B. SMS, MMS oder auch Sprachnachrichten Kenntnis erlangen kann. Für unberechtigte Nutzer **170,** also alle Nutzer des mobilen Kommunikationsgerätes **200,** die nicht über die nötige Berechtigung zum Zugang zum zugriffsgeschützten Speicherbereich **110** verfügen, lässt sich das mobile Kommunikationsgerät normal bedienen. Entsprechend Fig. 1 wird ankommende Kommunikation **140** oder **150** wie gewohnt auf dem mobilen Kommunikationsgerät dargestellt. Hierdurch ist eine völlig normale Nutzung des mobilen Kommunikationsgerätes **200** möglich, mit der zusätzlichen Option, dass private Nachrichten **130** nur für den berechtigten Nutzer **160** erkennbar und zugänglich sind. Es ist jedoch auch denkbar, dass z.B. durch ein Symbol auf dem Display des mobilen Kommunikationsgerätes **200** der Eingang einer privaten Nachricht **130** angezeigt wird.

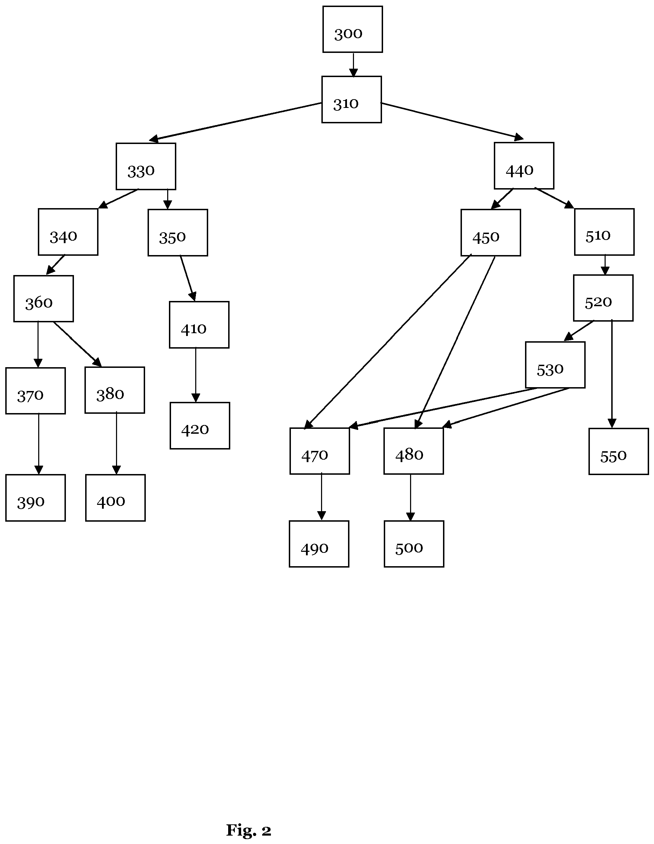

Im Folgenden wird die Erfindung unter Bezug auf Fig. 2 der vorliegenden Anmeldung erläutert. Im Schritt **300** findet ein Kommunikationsversuch (z.B. SMS, MMS, Anruf) statt. Nun ist entscheidend, ob das mobile Kommunikationsgerät **200** (vgl. Fig. 1) aktiviert ist oder nicht, siehe Schritt **310.**

Falls das mobile Kommunikationsgerät **200** aktiviert ist, ist entscheidend, ob auch der zugriffsgeschützte Speicherbereich **110** aktiviert ist **440.** Ist der zugriffsgeschützte Speicherbereich **110** nicht aktiviert **450,** wird jede ankommende Kommunikation wie üblich behandelt. Ist das mobile Kommunikationsgerät **200** auf "lautlos" gestellt **480,** kann eine Nachricht oder ein Symbol auf dem Display dargestellt werden, welche den Nutzer über ankommende Kommunikation informiert **500.** Ist das mobile Kommunikationsgerät **200** nicht auf lautlos gestellt **470,** erfolgt ein normaler Signalton **490,** der den Nutzer über ankommende Kommunikation informiert. Das mobile Kommunikationsgerät **200** lässt sich also wie gewöhnlich benutzen.
Ist hingegen der zugriffsgeschützte Speicherbereich **110** aktiviert **510,** hat dies Auswirkungen auf den Umgang mit der ankommenden Kommunikation. Wenn die ankommende Kommunikation als "privat" erkannt wird **520,** also in dem zugriffsgeschützten Speicherbereich **110** abgelegt werden soll, so erfolgt keinerlei Hinweis auf dem mobilen Kommunikationsgerät **200,** dass im Moment ein Kontaktversuch erfolgt. Die ankommende Kommunikation wird automatisch in dem zugriffsgeschützten Speicherbereich **110** gespeichert und ist dort unsichtbar, bis sie durch den berechtigten Nutzer abgerufen wird **550.** Eine ankommende Kommunikation, die nicht als "privat" identifiziert wird **530,** wird im weiteren Verlauf wie eine normale Kommunikation behandelt, d.h. gemäß den Schritten **470, 480.**

Die folgenden Schritte 330 bis 420 sind Teile eines Beispiels, das nicht Bestandteil der Erfindung ist. Ist das mobile Kommunikationsgerät **200** jedoch nicht aktiviert **310,** ist entscheidend, ob der zugriffsgeschützte Speicherbereich **110** aktiviert ist oder nicht, Schritt **330.** Falls der zugriffsgeschützte Speicherbereich **110** aktiviert ist **350,** wird die als "privat" identifizierte Kommunikation in den zugriffsgeschützten Speicherbereich **110** umgeleitet **410.** Ein berechtigter Nutzer kann diese Kommunikation nach dem Einschalten des mobilen Kommunikationsgerätes **200** abhören **420.** Dies ist jedoch nur möglich, nachdem der Zugriff darauf gewährt wird, was durch eine Autorisierung gemäß einem der in dieser Anmeldung vorgestellten Aspekte geschehen kann.

Ist der zugriffsgeschützte Speicherbereich jedoch nicht aktiviert **340**, dann wird jegliche ankommende Kommunikation wie gewöhnlich behandelt und z.B. in die reguläre Mobilbox umgeleitet **380,** falls diese aktiv ist **360.** Dann kann beim Einschalten des mobilen Kommunikations- gerätes **200** eine Erinnerung über sämtliche entgangene Kommunikation z.B. auf dem Display des mobilen Kommunikationsgerätes erscheinen **400**. Dieser Fall ist für vertrauliche Kommunikation besonders riskant, da diese ungeschützt abrufbar ist. Ist die Mobilbox nicht aktiviert **370,** dann erscheint beim Einschalten des mobilen Kommunikationsgerätes **200** eine Erinnerung über ankommende Kommunikation, die nicht durchgestellt werden konnte **390**. Dies ist ebenfalls riskant, da allein durch das Bekanntwerden einer Teilnehmer-Identifikation schon vertrauliche Information bekannt werden könnte. Ein weiteres Risiko besteht in der verspäteten Zustellung von Kurznachrichten (z.B. SMS, MMS), denn diese werden direkt auf dem mobilen Kommunikationsgerät **200** dargestellt und sind nicht zugriffsgeschützt, falls der zugriffsgeschützte Speicherbereich nicht aktiviert ist.

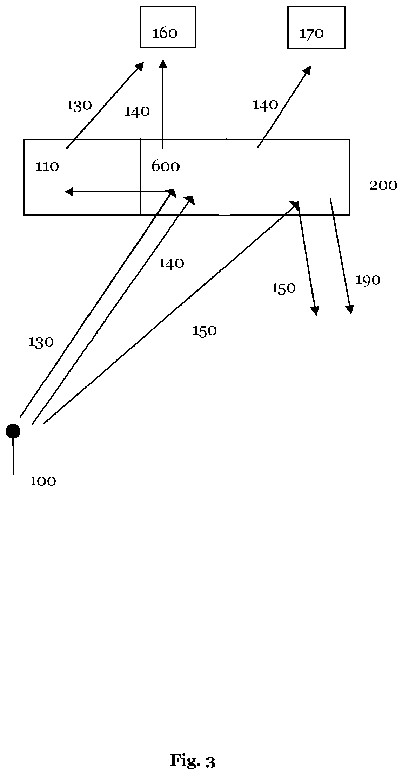

Figur 3 stellt eine weitere bevorzugte Ausführungsform der vorliegenden Erfindung dar. Die gezeigte Ausführungsform entspricht im Wesentlichen der in Figur 1 bereits dargestellten Ausführungsform.

Zusätzlich verfügt die Vorrichtung jedoch über einen selektiven Filter **600,** der die ankommende Kommunikation abhängig von der jeweiligen Teilnehmer-Identifikation filtert. Eine erste ankommende Kommunikation **130** wird vom Selektivfilter **600** als "privat" erkannt und in dem zugriffsgeschützten Speicherbereich **110** gespeichert. Dort kann sie dann von einem berechtigten Nutzer **160** abgerufen werden, z.B. nach Eingabe eines PIN-Codes, Fingerabdrucks, anderer biometrischer Verfahren oder eines anderen geeigneten Verfahrens.

Eine zweite ankommende Kommunikation **140,** welche vom Selektivfilter **600** als nicht privat erkannt, aber dennoch akzeptiert wird, wird wie eine gewöhnliche Kommunikation am mobilen Kommunikationsgerät **200** dargestellt. Dies kann ein Klingelton im Falle eines Anrufs oder ein beliebiges anderes geeignetes Signal oder / und eine Nachricht sein. Diese Kommunikation kann von allen Benutzern **160, 170** des mobilen Kommunikationsgerätes **200** abgerufen werden.

Eine dritte ankommende Kommunikation **150** könnte vom Selektivfilter **600** als "unerwünscht" erkannt werden. Dies führt zu einer Abweisung der ankommenden Kommunikation **150.** Die Erfindung sieht des Weiteren vor, dass der andere Teilnehmer eine Nachricht erhalten kann. Eine mögliche Nachricht könnte den anderen Teilnehmer darüber informieren, dass der gewünschte Teilnehmer in einem bestimmten Zeitraum nicht, oder unter einer anderen Teilnehmer-Identifikation erreichbar ist.

Wie oben erläutert, erfolgt die Aktivierung, bzw. Deaktivierung des zugriffsgeschützten Speicherbereichs ausschließlich durch den autorisierten Benutzer. Dies kann über ein Passwort, einen Fingerabdruck oder beliebige andere geeignete Verfahren erfolgen.

Ein großer Vorteil der vorliegenden Erfindung liegt darin, dass die eigene Telefonnummer nicht mehr wie ein Geheimnis gehütet werden muss, wie dies häufig bei Politikern oder prominenten Personen der Fall ist. Es ist auch nicht nötig, mehrere mobile Kommunikationsgeräte zu besitzen, da die Erfindung eine exakte Kontrolle über akzeptierte Kontakte ermöglicht. Diese Kontrolle über sämtliche Kommunikation erfolgt durch den Benutzer, der selbst entscheiden kann, wann er für wen zu erreichen ist.

Des Weiteren ist es möglich, eine Umkehrfunktion im mobilen Kommunikationsgerät **200** zu implementieren. Es ist zum Beispiel denkbar, die erfindungsgemäße Vorrichtung als eine Art Kindersicherung zu nutzen. Die Eltern könnten abgehende Kommunikation, die ein bestimmtes Kriterium erfüllt, z.B. bestimmte Rufnummern, grundsätzlich sperren, oder auch nur zu bestimmten Uhrzeiten (z.B. abends). So kann nur eine vordefinierte Kommunikation von dem jeweiligen mobilen Kommunikationsgerät **200** abgehen **190.** Dies kann zu einer geringeren Abhängigkeit vom mobilen Kommunikationsgerät **200** führen, was beispielsweise positiv für die Konzentrationsfähigkeit des Kindes ist. Außerdem ist es z.B. denkbar, Auslandsvorwahlen zu sperren, um Kosten zu sparen. Eine weitere Möglichkeit wäre es, abgehenden Datentransfer zu begrenzen, insbesondere um Kosten zu sparen. Zusätzlich ist es auch denkbar, dass sämtliche Kontaktversuche in dem zugriffsgeschützten Bereich abgelegt werden. Eine Übersicht mit Kontaktversuchen könnte später durch die berechtigten Nutzer abgerufen werden. Die Einstellung solcher "Sicherungen" ist nur nach Eingabe des persönlichen Zugangscodes möglich, der den Eltern vorliegt.

Die Mittel zur Verwirklichung der vorliegenden Erfindung als Verfahren, Vorrichtung oder System können aus Hardware, Software oder einer beliebigen Kombination daraus bestehen. Die Mittel können ferner Schaltkreise, Module, integrierte Chips, oder verschiedenartige Speichermedien (beispielsweise Flash-Speicher, CD-ROM, DVD, Smartcards, Speichersticks) aufweisen oder beliebige Kombinationen hiervon. Des Weiteren können alle in den abhängigen Ansprüchen genannten Eigenschaften vollständig oder teilweise durch Software implementiert werden. Als mobile Kommunikationsgeräte kommt jegliche Art von Geräten in Betracht, die sich zum Senden und / oder Empfangen mobiler Kommunikation eignen, z.B. Handys, Smartphones, Tablet-PCs, o.ä. Die vorliegende Erfindung ist unabhängig von einer verwendeten Mobilfunktechnologie.

## Patentansprüche

1. Vorrichtung auf einem mobilen Kommunikationsgerät (200), aufweisend:
a. Mittel zum Erkennen einer eindeutigen Teilnehmer-Identifikation einer ankommenden Kommunikation (130, 140, 150);
b. Mittel zum Speichern der ankommenden Kommunikation (130,140, 150) in einen zugriffsgeschützten Bereich (110) des mobilen Kommunikationsgeräts (200), wenn die Teilnehmer-Identifikation mindestens ein bestimmtes Kriterium (520) erfüllt;
c. Mittel zum Durchstellen (470, 480) ankommender Kommunikation (130, 140, 150), wenn mindestens ein bestimmtes Kriterium (530) erfüllt ist;
d. wobei das mindestens eine Kriterium zum Speichern (520) und / oder Durchstellen (530) der ankommenden Kommunikation (130, 140, 150) auf einer Erkennung der Kontakthäufigkeit basiert;
e. Mittel zum Erkennen einer eindeutigen Teilnehmer-Identifikation einer abgehenden Kommunikation;
f. Mittel zum Speichern der abgehenden Kommunikation in einen zugriffsgeschützten Speicherbereich (110) des mobilen Kommunikationsgerätes (200), wenn die Teilnehmer-Identifikation mindestens ein bestimmtes Kriterium erfüllt; und
g. wobei die Vorrichtung weiterhin geeignet ist, abgehende Kommunikation nach der Häufigkeit zu beschränken.

2. Vorrichtung nach Anspruch 1, wobei die Teilnehmer-Identifikation einer Telefonnummer entspricht.

3. Vorrichtung nach einem der vorhergehenden Ansprüche, wobei die ankommende Kommunikation (130, 140, 150) ein Telefongespräch ist.

4. Vorrichtung nach einem der vorhergehenden Ansprüche, wobei die +ankommende Kommunikation (130, 140, 150) eine Kurznachricht ist.

5. Vorrichtung nach einem der vorhergehenden Ansprüche, wobei der Zugriff auf den zugriffsgeschützten Speicherbereich (110) durch ein Passwort geschützt ist.

6. Vorrichtung nach einem der vorhergehenden Ansprüche, wobei der Zugriff auf den zugriffsgeschützten Speicherbereich (110) durch einen Fingerabdruck geschützt ist.

7. Vorrichtung nach einem der vorhergehenden Ansprüche, wobei der zugriffsgeschützte Speicherbereich (110) ein Postfach für Sprachnachrichten umfasst.

8. Vorrichtung nach einem der vorhergehenden Ansprüche, wobei ein zusätzliches Kriterium zum Speichern (520) und / oder Durchstellen (530) der ankommenden Kommunikation (130, 140, 150) von einer Uhrzeit oder / und einem Datum abhängt.

9. Vorrichtung nach einem der vorhergehenden Ansprüche, wobei ein zusätzliches Kriterium zum Speichern (520) und / oder Durchstellen (530) der ankommenden Kommunikation (130, 140, 150) vom Standort des empfangenden mobilen Kommunikationsgerätes (200) abhängt.

10. Vorrichtung nach einem der vorhergehenden Ansprüche, wobei ein zusätzliches Kriterium zum Speichern (520) und / oder Durchstellen (530) der ankommenden Kommunikation (130, 140, 150) auf einer Prioritätseinteilung basiert.

11. Computerprogramm für ein mobiles Kommunikationsgerät (200), aufweist
a. Mittel zum Erkennen einer eindeutigen Teilnehmer-Identifikation einer ankommenden Kommunikation (130, 140, 150);
b. Mittel zum Speichern der ankommenden Kommunikation (130, 140, 150) in einen zugriffsgeschützten Bereich (110) des mobilen Kommunikationsgeräts (200), wenn die Teilnehmer-Identifikation mindestens ein bestimmtes Kriterium (520) erfüllt;
c. Mittel zum Durchstellen (470, 480) ankommender Kommunikation (130, 140, 150), wenn mindestens ein bestimmtes Kriterium (530) erfüllt ist;
d. wobei das mindestens eine Kriterium zum Speichern (520) und / oder Durchstellen (530) der ankommenden Kommunikation (130, 140, 150) auf einer Erkennung der Kontakthäufigkeit basiert;
e. Mittel zum Erkennen einer eindeutigen Teilnehmer-Identifikation einer abgehenden Kommunikation;
f. Mittel zum Speichern der abgehenden Kommunikation in einen zugriffsgeschützten Speicherbereich (110) des mobilen Kommunikationsgerätes (200), wenn die Teilnehmer-Identifikation mindestens ein bestimmtes Kriterium erfüllt; und
g. Mittel zum Beschränken abgehender Kommunikation nach der Häufigkeit.

## Claims

1. Apparatus at a mobile communication device (200), comprising:
a. means for detecting a unique subscriber identification of an incoming communication (130, 140, 150);
b. means for storing the incoming communication (130, 140, 150) into a protected area (110) of the mobile communication device (200) if the subscriber identification fulfills at least one specific criterion (520);
c. means for putting through (470, 480) incoming communication (130, 140, 150) if at least one specific criterion (530) is fulfilled; and
d. wherein the at least one criterion for storing (520) and/or putting through (530) the incoming communication (130, 140, 150) is based on a detection of the frequency of contact;
e. means for detecting a unique subscriber identification of an outgoing communication;
f. means for storing the outgoing communication into a protected storage area (110) of the mobile communication device (200), if the subscriber identification fulfills at least one specific criterion; and
g. wherein the apparatus is further adapted for limiting outgoing communication based on the frequency.

2. Apparatus according to claim 1, wherein the subscriber identification is a telephone number.

3. Apparatus according to any of the preceding claims, wherein the incoming communication (130, 140, 150) is a phone call.

4. Apparatus according to any of the preceding claims, wherein the incoming communication (130, 140, 150) is a short message.

5. Apparatus according to any of the preceding claims, wherein the access to the protected storage area (110) is protected by a password.

6. Apparatus according to any of the preceding claims, wherein the access to the protected storage area (110) is protected by a finger print.

7. Apparatus according to any of the preceding claims, wherein the protected storage area (110) comprises a mailbox for voice messages.

8. Apparatus according to any of the preceding claims, wherein a further criterion for storing (520) and / or putting through (530) of the incoming communication (130, 140, 150) depends on a time and / or a date.

9. Apparatus according to any of the preceding claims, wherein a further criterion for storing (520) and/or putting through (530) the incoming communication (130, 140, 150) depends on the location of the receiving mobile communication device (200).

10. Apparatus according to any of the preceding claims, wherein a further criterion for storing (520) and/or putting through (530) the incoming communication (130, 140, 150) is based on a priority classification.

11. Computer program for a mobile communication device (200), comprising:
a. means for detecting a unique subscriber identification of an incoming communication (130,140,150);
b. means for storing the incoming communication (130, 140, 150) into a protected area (110) of the mobile communication device (200), if the subscriber identification fulfills at least one specific criterion (520);
c. means for putting through (470, 480) incoming communication (130, 140, 150), if at least one specific criterion (530) is fulfilled;
d. wherein the at least one criterion for storing (520) and/or putting through (530) the incoming communication (130, 140, 150) is based on a detection of the frequency of contact;
e. means for detecting a unique subscriber identification of an outgoing communication;
f. means for storing the outgoing communication into a protected storage area (110) of the mobile communication device (200), if the subscriber identification fulfills at least one specific criterion; and
g. means for limiting outgoing communication based on the frequency.

## Revendications

1. Dispositif sur un appareil de communication mobile (200), présentant :
a. des moyens pour reconnaître une identification non ambiguë d'un abonné d'une communication entrante (130, 140, 150) ;
b. des moyens pour stocker la communication entrante (130, 140, 150) dans une zone à accès protégé (110) de l'appareil de communication mobile (200) quand l'identification de l'abonné satisfait au moins à un certain critère (520) ;
c. des moyens pour établir (470, 480) une communication entrante (130, 140, 150) quand au moins un certain critère (530) est satisfait ;
d. dans lequel le ou les critères pour le stockage (520) et/ou l'établissement (530) de la communication entrante (130, 140, 150) se fondent sur une reconnaissance de la fréquence des contacts ;
e. des moyens pour reconnaitre une identification non ambiguë de l'abonné d'une communication sortante ;
f. des moyens pour stocker la communication sortante dans une zone de mémoire à accès protégé (110) de l'appareil de communication mobile (200) quand l'identification de l'abonné satisfait à au moins un certain critère ; et
g. le dispositif étant en outre apte à limiter la communication sortante en fonction de la fréquence.

2. Dispositif selon la revendication 1, dans lequel l'identification de l'abonné correspond à un numéro de téléphone.

3. Dispositif selon l'une des revendications précédentes, dans lequel la communication entrante (130, 140, 150) est une conversation téléphonique.

4. Dispositif selon l'une des revendications précédentes, dans lequel la communication entrante (130, 140, 150) est un minimessage.

5. Dispositif selon l'une des revendications précédentes, dans lequel l'accès à la zone de mémoire à accès protégé (110) est protégé par un mot de passe.

6. Dispositif selon l'une des revendications précédentes, dans lequel l'accès à la zone de mémoire à accès protégé est protégé par une empreinte digitale.

7. Dispositif selon l'une des revendications précédentes, dans lequel la zone de mémoire à accès protégé (110) comprend une boite postale pour des messages vocaux.

8. Dispositif selon l'une des revendications précédentes, dans lequel un critère supplémentaire pour le stockage (520) et/ou l'établissement (530) de la communication entrante (130, 140, 150) dépend d'une heure et/ou d'une date.

9. Dispositif selon l'une des revendications précédentes, dans lequel un critère supplémentaire pour le stockage (520) et/ou l'établissement (530) de la communication entrante (130, 140, 150) dépend de la localisation de l'appareil de communication mobile récepteur (200).

10. Dispositif selon l'une des revendications précédentes, dans lequel un critère supplémentaire pour le stockage (520) et/ou l'établissement (530) de la communication entrante (130, 140, 150) se fonde sur une classification de priorités.

11. Programme informatique pour un appareil de communication mobile (200), présentant:
a. des moyens pour reconnaitre une identification non ambiguë d'un abonné d'une communication entrante (130, 140, 150) ;
b. des moyens pour stocker la communication entrante (130, 140, 150) dans une zone à accès protégé (110) de l'appareil de communication mobile (200) quand l'identification de l'abonné satisfait au moins à un certain critère (520) ;
c. des moyens pour établir (470, 480) une communication entrante (130, 140, 150) quand au moins un certain critère (530) est satisfait ;
d. dans lequel le ou les critères pour le stockage (520) et/ou l'établissement (530) de la communication entrante (130, 140, 150) se fondent sur une reconnaissance de la fréquence des contacts ;
e. des moyens pour reconnaitre une identification non ambiguë de l'abonné d'une communication sortante ;
f. des moyens pour stocker la communication sortante dans une zone de mémoire à accès protégé (110) de l'appareil de communication mobile (200) quand l'identification de l'abonné satisfait à au moins un certain critère ; et
g. des moyens pour limiter la communication sortante en fonction de la fréquence.
